(19) **Europäisches Patentamt / European Patent Office / Office européen des brevets**

(11) **EP 3 149 524 B1**

(12) **FASCICULE DE BREVET EUROPEEN**

(45) Date de publication et mention de la délivrance du brevet:
**17.02.2021 Bulletin 2021/07**

(21) Numéro de dépôt: **15725589.4**

(22) Date de dépôt: **26.05.2015**

(51) Int Cl.:
*G02B 6/42* (2006.01)    *H01S 3/23* (2006.01)

(86) Numéro de dépôt international:
**PCT/EP2015/061536**

(87) Numéro de publication internationale:
**WO 2015/181137 (03.12.2015 Gazette 2015/48)**

(54) **SYSTEME DE RECOMBINAISON SPATIALE D'IMPULSIONS LASER ULTRA-BREVES PAR UN ELEMENT DIFFRACTIF**

SYSTEM ZUR RÄUMLICHEN REKOMBINATION VON ULTRAKURZEN LASERIMPULSEN MITTELS BEUGUNGSELEMENT

SYSTEM FOR SPATIAL RECOMBINATION OF ULTRASHORT LASER PULSES BY MEANS OF A DIFFRACTIVE ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2014 FR 1401219**

(43) Date de publication de la demande:
**05.04.2017 Bulletin 2017/14**

(73) Titulaire: **THALES**
**92400 Courbevoie (FR)**

(72) Inventeurs:
• **BOURDERIONNET, Jérôme**
  **F-91767 Palaiseau Cedex (FR)**
• **BRIGNON, Arnaud**
  **F-91767 Palaiseau Cedex (FR)**

(74) Mandataire: **Marks & Clerk France**
**Immeuble "Visium"**
**22, avenue Aristide Briand**
**94117 Arcueil Cedex (FR)**

(56) Documents cités:
**DE-A1-102010 033 630    US-A1- 2011 305 250**
**US-B1- 8 179 594**

**Description**

Le domaine de l'invention est celui de la recombinaison cohérente d'un grand nombre de sources lasers impulsionnelles ultra-brèves c'est-à-dire de largeur d'impulsion inférieure à la picoseconde. Le cadre de l'invention concerne la technique de recombinaison spatiale de ces impulsions lasers supposées parfaitement synchronisées par ailleurs.

La recombinaison cohérente de sources lasers impulsionnelles ultra-brèves s'applique notamment à la réalisation de sources lasers de forte énergie.

Les méthodes de recombinaison spatiale de faisceaux cohérents se classent en 2 catégories, selon que l'on choisit de juxtaposer les faisceaux optiques en champ lointain ou de les superposer en champ proche, c'est-à-dire au niveau de la pupille de sortie du système.

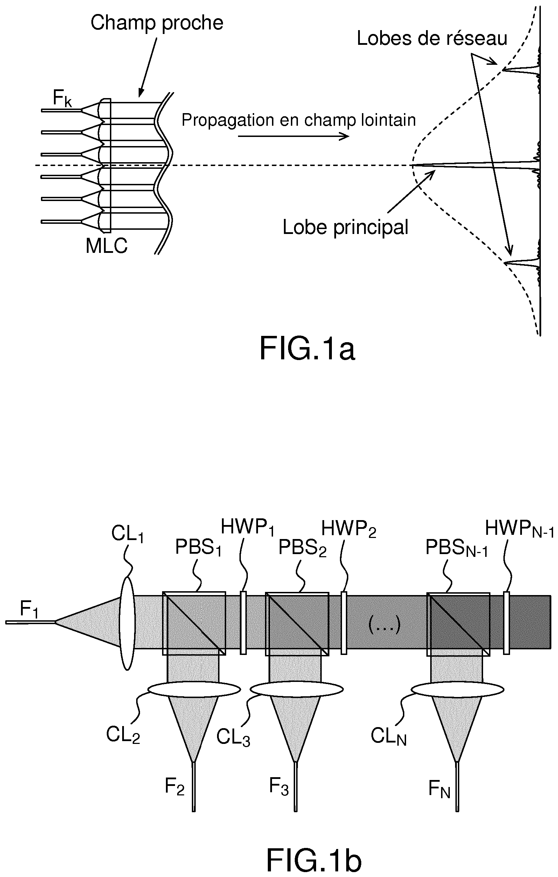

Un système de recombinaison par juxtaposition est montré figure 1a. Dans ce cas, les faisceaux à recombiner, issus de sources laser $F_k$, k variant de 0 à N, sont parallèles et collimatés en champ proche par une matrice de lentilles de collimation MLC, et disposés les uns à côté des autres, de la manière la plus compacte possible. La superposition des faisceaux s'effectue alors par propagation libre jusqu'au champ lointain. Un tel système n'implique pas de composants dispersifs et s'applique donc indifféremment pour des largeurs d'impulsion inférieures à la picoseconde. L'inconvénient majeur de ce système est toutefois sa relativement faible efficacité, avec notamment une part significative de l'énergie perdue dans les lobes de réseau.

Dans le cas d'un système de superposition en champ proche, on peut par exemple recombiner les faisceaux optiques en utilisant la polarisation du champ électromagnétique : les faisceaux optiques issus des sources lasers $F_k$ et collimatés par des lentilles de collimation $CL_k$, sont superposés en champ proche au moyen de cubes séparateurs de polarisation $PBS_k$ respectivement associés à des lames demi-onde $HWP_k$. comme illustré par l'exemple de la figure 1b. Selon ce système l'efficacité de recombinaison pour N faisceaux est donnée par :

$$Eff = \frac{1}{N}\left(\eta^{N-1} + \Sigma_{\kappa=1}^{N-1}\eta^{\kappa}\right)$$

où $\eta$ est le coefficient de transmission de chaque couple (cube séparateur de polarisation / lame demi-onde). L'avantage de cette architecture est sa relative simplicité de mise en œuvre pour un nombre réduit de faisceaux à recombiner : typiquement une dizaine au maximum. Pour un grand nombre de faisceaux, d'une part la mise en oeuvre du système devient très complexe, et d'autre part, l'efficacité de recombinaison chute rapidement avec le nombre de sources (pour $\eta$ =99%, l'efficacité chute à 10% pour 1000 faisceaux recombinés).

Qu'il s'agisse de recombinaison en champ lointain par propagation libre de faisceaux collimatés et parallèles, ou de superposition des faisceaux en champ proche en utilisant une lame séparatrice ou un cube séparateur de polarisation, aucun de ces systèmes n'est adapté à une recombinaison d'un grand nombre d'impulsions (typiquement >100 voire 1000), soit pour des problèmes d'efficacité (lobes de réseau pour le dispositif en champ lointain), ou de mise en œuvre pour les systèmes en champ proche.

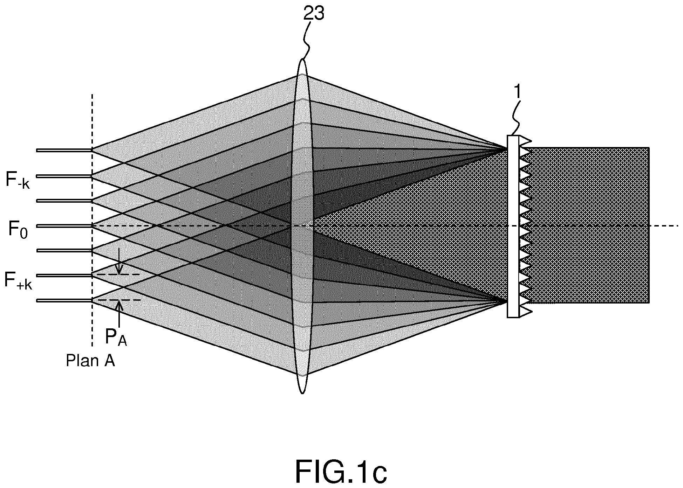

Une autre technique de recombinaison par superposition utilise un élément optique diffractif pour combiner les faisceaux. Selon cette technique illustrée figure 1c, une lentille 23 dans un montage à transformée de Fourier permet de collimater les faisceaux à recombiner (issus des sources lasers $F_k$) et de les diriger vers un élément optique diffractif ou DOE 1 (« DOE » acronyme de l'expression anglo-saxonne « Diffractive Optical Element ») situé dans le plan focal de la lentille 23. La distribution spatiale des points sources dans le plan objet A de la lentille 23 (distribution périodique de période $P_A$) est transformée en distribution d'angles d'incidence sur l'élément optique DOE 1. L'élément optique 1 est typiquement un réseau de phase périodique, par exemple de type réseau de Damann, qui assure l'interférence constructive de tous les faisceaux incidents sur l'ordre 0, et destructive sur tous les autres ordres ; la période A de ce réseau et les angles d'incidence $\theta_{2k}$ sont liés par la formule connue des réseaux de diffraction :

$$\sin(\theta_{2k}) = k \times \frac{\lambda_0}{\Lambda}$$

Les avantages de cette architecture sont notamment une grande efficacité (au-delà de 90% démontrés en régime continu), et une architecture bien adaptée à un très grand nombre de faisceaux (typiquement > 100) du fait de ce positionnement collectif, d'un possible arrangement à deux dimensions, et de l'utilisation d'une seule lentille. En revanche, cette technique ne peut s'appliquer en l'état en régime d'impulsions ultra-brèves. Le document US2011305250 divulgue un tel système de recombinaison à l'aide d'un élément de recombinaison diffractif et avec une matrice de lentilles et une lentille Fourier de recombinaison formant un télescope.

Un système similaire est décrit dans le document DE102010033630 pour des sources à longueur d'ondes différentes et comprend une compensation de dispersion.

Le problème technique à résoudre consiste à transférer le plus efficacement possible l'énergie de chacune des impulsions lasers vers une seule par un processus cohérent, en dégradant le moins possible la qualité de faisceau de l'impulsion finale par rapport aux impulsions élémentaires, tout en étant compatible d'un grand nombre d'impulsions sommées, et également de durée d'impulsions sub-picoseconde.

La solution proposée et conformément à la revendication 1 est basée sur une recombinaison par superposition utilisant un élément optique diffractif DOE pour combiner les faisceaux. Selon l'invention et conformément à la revendication 1, un ensemble diffractif optique est placé en amont de cet élément optique diffractif pour permettre, via un système d'imagerie approprié, d'optimiser l'efficacité de combinaison en régime impulsionnel ultra-bref.

Plus précisément l'invention a pour objet un système de recombinaison spatiale de faisceaux lasers impulsionnels de même longueur d'onde centrée autour de $\lambda_0$, issus de N sources k synchronisées, k variant de 1 à N, N étant un entier >1, qui a un axe optique et comprend :

- une lentille de Fourier de focale $f_2$, de plan objet et de plan image prédéfinis, les faisceaux laser présentant à $\lambda_0$ une configuration spatiale périodique de pas $P_A$, dans le plan objet (plan A),
- un élément optique diffractif de recombinaison à profil de phase périodique, sur lequel les N faisceaux sont destinés à être dirigés par la lentille de Fourier selon un angle d'incidence $\theta_{2k}$ différent d'un faisceau à l'autre, ces angles d'incidence étant déterminés en fonction de la période de l'élément optique diffractif de recombinaison.

Il est principalement caractérisé en ce que les sources sont aptes à émettre des impulsions de durée inférieure à $10^{-12}$ s, et en ce qu'il comporte :

- N éléments optiques diffractifs de compensation (DOEs) à réseau périodique avec un élément optique diffractif de compensation par source, un angle d'incidence $\theta_{1k}$ différent d'un faisceau à l'autre, et un pas de réseau $\Lambda_{1k}$ différent entre éléments optiques diffractifs de compensation voisins,

  - une matrice de lentilles avec une lentille par source, de plan objet et de plan image prédéfinis, formant avec la lentille de Fourier un montage à double TF de grandissement prédéterminé $\gamma$, apte à imager chaque élément optique diffractif de compensation sur l'élément optique diffractif de recombinaison, les DOE de compensation étant situés dans le plan objet de la matrice de lentilles, le DOE de recombinaison étant situé dans le plan image de la lentille de Fourier, le plan image de la matrice de lentilles coïncidant avec le plan objet de la lentille de Fourier,

et en ce que pour chaque DOE de compensation, l'angle d'incidence $\theta_{1k}$ du faisceau sur le DOE de compensation, l'angle d'inclinaison $\Theta_k$ du DOE de compensation sur l'axe optique, et le pas $\Lambda_{1k}$ de son réseau, sont déterminés à partir du pas $P_A$, de k, de $\lambda_0$, du grandissement $\gamma$, de la focale $f_2$ et de la période de l'élément optique diffractif de recombinaison.

Selon un mode de réalisation de l'invention, les angles d'inclinaison $\Theta_k$ des DOEs de compensation sont nuls, les DOEs étant situés dans un même plan.

Les sources peuvent être disposées selon une configuration spatiale à une dimension ou deux dimensions.

De préférence, les réseaux DOEs de compensation sont des réseaux blazés.

Selon une caractéristique de l'invention, les faisceaux issus des sources laser ont un même plan de sortie, et le système comprend une autre lentille de Fourier ayant un plan objet dans lequel est situé le plan de sortie des sources laser et un plan image des sources laser. La position du plan image de cette lentille par rapport au plan dans lequel est situé l'ensemble des éléments optiques diffractifs de compensation, ainsi que l'espacement des sources dans le plan objet de la lentille, sont déterminés en fonction de la focale de la lentille de Fourier, de la période $P_A$, et des angles $\theta_{1k}$.

D'autres caractéristiques et avantages de l'invention apparaîtront à la lecture de la description détaillée qui suit, faite à titre d'exemple non limitatif et en référence aux dessins annexés dans lesquels :

les figures 1 déjà décrites représentent schématiquement des système de recombinaison spatiale de faisceaux cohérents en champ proche (fig 1a), en champ lointain (fig 1b) et par un élément diffractif (fig 1c),
les figures 2 illustrent schématiquement les problèmes posés par un système de recombinaison spatiale de faisceaux cohérents par un élément diffractif : la dispersion chromatique (fig 2a), le défaut de recouvrement spatial (fig 2b), ainsi qu'un exemple de courbe du coefficient de recouvrement en fonction de la taille de la pupille (fig 2c),
la figure 3 illustre schématiquement les conditions remplies par un système de recombinaison spatiale de faisceaux cohérents par un élément diffractif selon l'invention,
la figure 4 représente schématiquement un exemple de système de recombinaison spatiale de faisceaux cohérents par un élément diffractif selon l'invention,

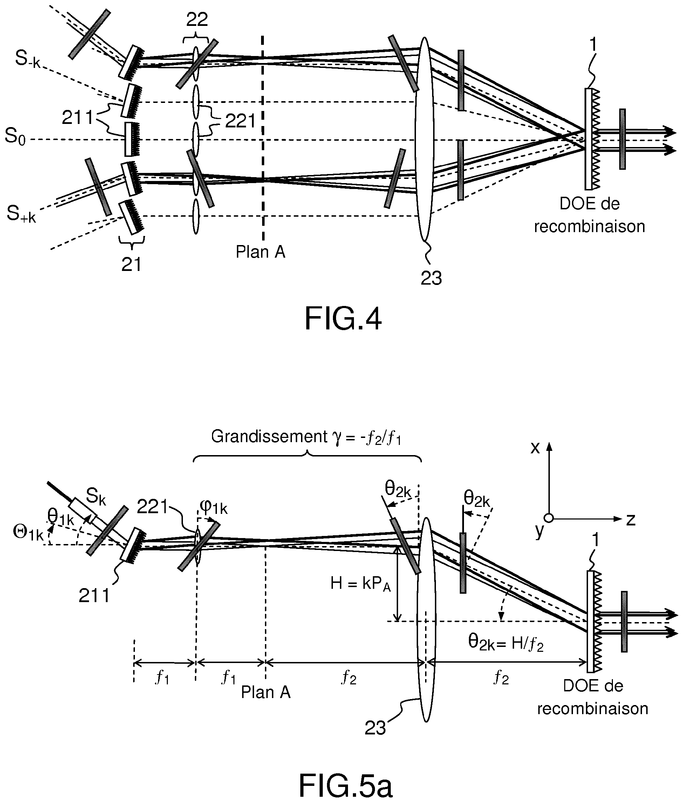

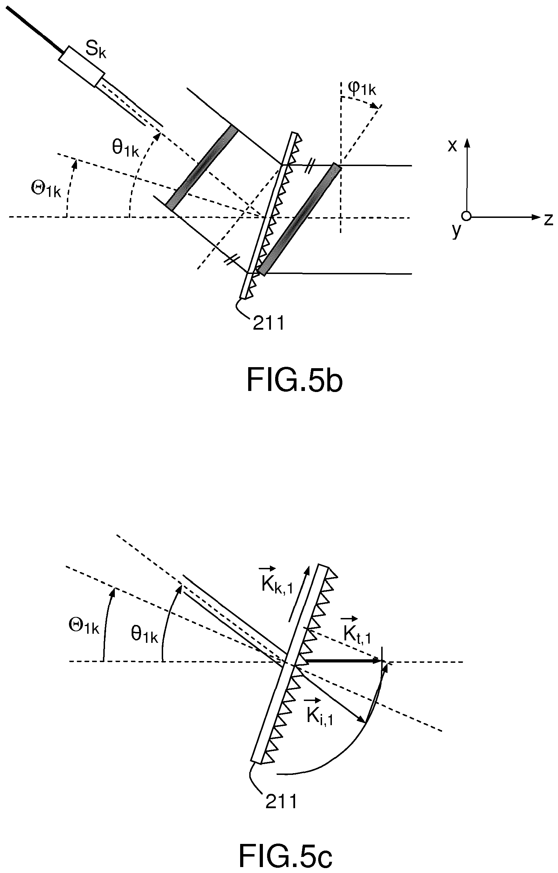

les figures 5 représentent schématiquement pour une seule source, le principe (fig 5a) de compensation de dispersion chromatique et d'optimisation du recouvrement spatial par un système de recombinaison spatiale de faisceaux selon l'invention, une vue plus détaillée au niveau d'un DOE de compensation illustrant l'inclinaison de la répartition spatiale de l'impulsion au passage à travers un DOE de compensation (fig 5b), et la construction géométrique correspondante illustrant la construction géométrique du vecteur réseau $\vec{K}_{k,1}$ du DOE de compensation en fonction des angles d'incidence et d'inclinaison du réseau, et du vecteur d'onde incident $\vec{K}_{i,1}$ (fig 5c),

les figures 6 illustrent schématiquement la détermination graphique des angles de diffraction sur un DOE de compensation (fig 6a) et sur le DOE de combinaison (fig 6b) pour deux longueurs d'onde différentes,

la figure 7 illustre un exemple de calcul des angles d'incidence et d'inclinaison des réseaux de compensation pour une optimisation du recouvrement des impulsions sur le DOE de combinaison et la compensation de la dispersion chromatique,

les figures 8 montrent deux exemples de réalisation d'un système de recombinaison spatiale de faisceaux selon l'invention, avec des DOE de compensation disposés dans un même plan lorsque l'on privilégie la compensation chromatique (fig 8b) ou la compensation du défaut de recouvrement (fig 8a).

D'une figure à l'autre, les mêmes éléments sont repérés par les mêmes références.

La description est faite en référence à l'orientation des figures décrites.

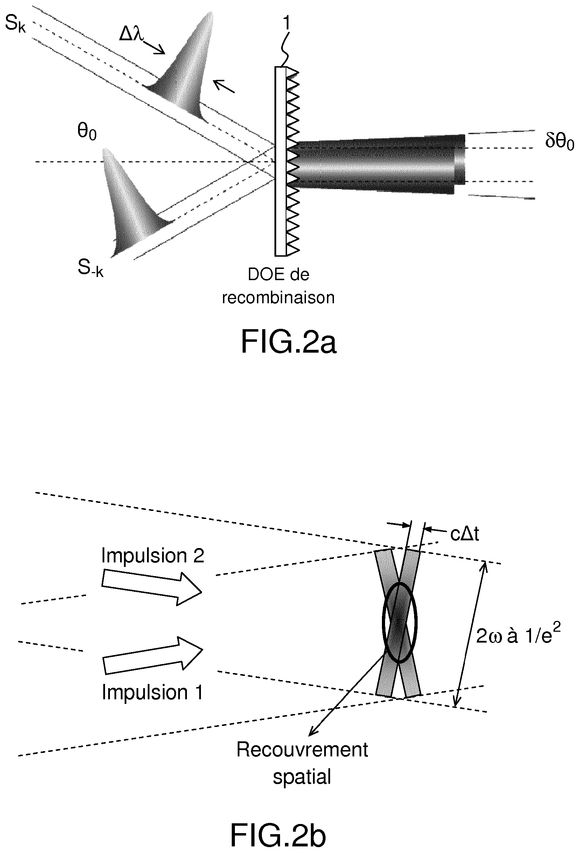

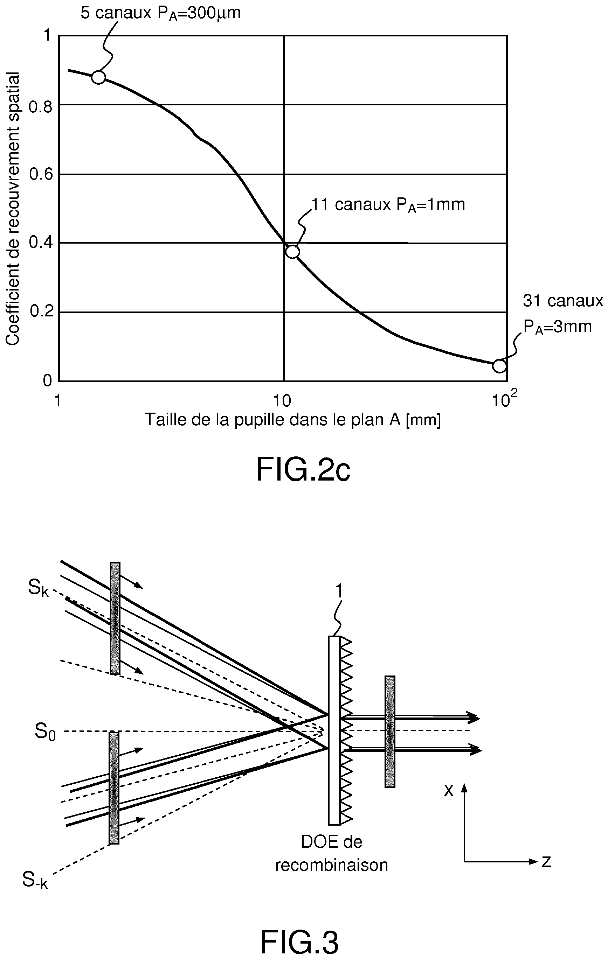

Lorsque le système vise à recombiner des sources lasers impulsionnelles, avec une largeur d'impulsions typiquement inférieure à 1 picoseconde, deux difficultés apparaissent pour la mise en place du système de recombinaison avec un DOE tel que décrit sur les figures 2 :

- La première difficulté est liée à la largeur spectrale des impulsions (typiquement de l'ordre de $\Delta\lambda$=10nm pour $\Delta t\sim100.10^{-15}$s). L'élément diffractif 1 est spécifié et réalisé pour une longueur d'onde de fonctionnement donnée. Toutefois, une largeur spectrale de l'ordre de 10nm n'affecte pas sensiblement l'efficacité de recombinaison du DOE (typiquement quelques % de perte d'efficacité pour une largeur spectrale de 10nm). La dispersion angulaire $\delta\theta_0$ du DOE est en revanche plus problématique (la composante bleue du spectre de l'impulsion sortira du DOE avec un angle différent de la composante rouge, comme illustré figure 2a).

  Cet effet nuit d'une part à la qualité spatiale du faisceau recombiné en augmentant sa divergence et d'autre part dégrade la dispersion spatiale du faisceau et élargit temporellement l'impulsion.

- La deuxième difficulté est liée au recouvrement spatial d'impulsions brèves ayant des angles d'incidence différents sur le DOE. Cet effet est illustré sur la figure 2b et est lié à l'étendue spatiale limitée des impulsions: limitée à $2\omega$ (à $1/e^2$) transversalement à la direction de propagation de la lumière, et limitée à $c.\Delta t$ dans la direction de propagation de la lumière (c la vitesse de la lumière, et $\Delta t$ la durée de l'impulsion). On a un recouvrement parfait des impulsions pour un angle nul entre les directions de propagation, et un recouvrement qui diminue lorsque cet angle augmente. Dans l'application illustrée sur la figure 1c pour une ouverture numérique égale à 1, l'angle entre les directions de propagation dépend de la focale de la lentille de Fourier 23 utilisée, laquelle vaut au minimum la taille de la pupille totale dans le plan A soit le produit du nombre de canaux (à une dimension, ou selon un diamètre du motif de disposition des sources lasers) multiplié par le pas entre 2 sources consécutives dans le plan A. La figure 2c donne le coefficient de recouvrement entre les impulsions (de durée $300\ 10^{-15}$s) calculé en fonction de la taille de la pupille dans le plan A pour la meilleure valeur de focale de la lentille de Fourier. Ce calcul illustre bien l'impossibilité d'utiliser efficacement l'architecture telle que montrée figure 1c en régime d'impulsions courtes ($<10^{-12}$s) pour un nombre de canaux typiquement supérieur à 10 (sur une dimension).

Finalement, un système de recombinaison utilisant un élément diffractif optique DOE, qui assure l'interférence constructive de toutes les impulsions selon une unique direction de propagation, et destructive selon toutes les autres, pourrait être un excellent candidat à la recombinaison d'un grand nombre d'impulsions, mais il souffre de deux problèmes majeurs en régime d'impulsions ultra-brèves :

- le problème lié à la largeur spectrale des impulsions, et
- le défaut de recouvrement spatial des impulsions au niveau du DOE, du fait de la distribution des angles d'incidence des faisceaux.

Le système selon l'invention comprend une configuration de compensation qui a pour effet technique de réaliser les conditions illustrées figure 3, c'est-à-dire :

- d'une part, les composantes rouges et bleues du spectre de l'impulsion doivent arriver avec des incidences différentes sur le DOE de combinaison 1, calculées de manière à ce que les vecteurs d'onde en sortie de ce DOE de combinaison soient tous selon l'axe z de la figure, quelle que soit la longueur d'onde ;
- d'autre part, quel que soit l'angle d'incidence de l'impulsion sur le DOE de combinaison, la répartition spatiale d'énergie à un instant figé doit être parallèle au DOE de combinaison 1, soit parallèle au plan yOx de la figure, et ce pour optimiser le recouvrement spatial des impulsions sur le DOE de combinaison.

Cette configuration de compensation 2 est décrite en relation avec les figures 4 et 5a, 5b et 5c.

Un premier ensemble diffractif de compensation 21 est imagé sur le DOE de combinaison 1 par un dispositif d'imagerie. Ce dispositif d'imagerie comprend :

- une matrice 22 de M lentilles (une lentille par faisceau) de focales $f_1$ espacées du pas $P_A$, $P_A$ étant la période spatiale des faisceaux à $\lambda_0$ dans le plan A, et
- la lentille de Fourier 23 de focale $f_2$, et d'ouverture au moins égale à N x $f_1$, N étant le nombre de sources laser (selon la dimension représentée sur la figure 5a).

Cette matrice 22 de lentilles forme avec la lentille de Fourier 23 un montage à double TF de grandissement prédéterminé $\gamma$, apte à imager l'ensemble optique diffractif de compensation 21 sur l'élément optique diffractif de recombinaison 1 : l'ensemble optique diffractif de compensation 21 est situé dans le plan objet de la matrice de lentilles 22, le DOE de recombinaison 1 étant situé dans le plan image de la lentille de Fourier 23, le plan image de la matrice de lentilles 22 coïncidant avec le plan objet de la lentille de Fourier 23.

Cet ensemble diffractif de compensation 21 est subdivisé en N DOEs de compensation également espacés de $P_A$, chaque DOE de compensation 211 comportant un réseau de phase et/ou d'amplitude périodique de pas $\Lambda_{1k}$. Les faisceaux optiques issus des sources lasers impulsionnelles $S_k$ sont collimatées en amont du système (elles sont situées par exemple dans un plan et collimatées par une lentille, ou directement positionnées selon leur angle d'incidence $\theta_{1k}$ avec une lentille de collimation associée à chaque source), et chaque faisceau arrive avec un angle spécifique $\theta_{1k}$ sur le DOE de compensation 211 correspondant. Chaque pas $\Lambda_{1k}$ est calculé en fonction de l'angle d'incidence $\theta_{1k}$ du faisceau sur le DOE de compensation correspondant et de l'angle d'inclinaison $\Theta_k$ du DOE de compensation sur l'axe z (on a $\Lambda_{1(k-1)} \neq \Lambda_{1(k+1)}$, mais $\Lambda_{1(-k)} = \Lambda_{1(+k)}$), de sorte qu'à la longueur d'onde centrale $\lambda_0$ tous les faisceaux lasers sont parallèles en sortie des DOEs de compensation, c'est-à-dire qu'à la longueur d'onde centrale $\lambda_0$, les vecteurs d'onde $\vec{K}_{i,1}$ des impulsions en sortie des DOEs de compensation sont tous identiques. Les milieux de ces DOE 211 sont situés sur un même plan situé à $f_1$ de la matrice 22 de lentilles.

La lentille de Fourier 23 opère la transformée de Fourier du plan A vers le plan du DOE de combinaison 1 ; donc les angles d'incidences $\theta_{2k}$ des impulsions sur le DOE de combinaison sont donnés par :

$$\theta_{2k} = k \, . \, P_A \, / \, f_2.$$

Comme indiqué en préambule, ces angles $\theta_{2k}$ sont également liés à la période du réseau du DOE de combinaison 1 pour obtenir la combinaison optimale souhaitée.

Comme montré sur la figure 5a, pour que les répartitions spatiales d'énergie des impulsions incidentes sur le DOE de combinaison 1 soient parallèles au plan du DOE de combinaison (le plan xOy sur la figure), l'angle d'inclinaison (dans le plan xOz) de la répartition d'énergie des impulsions avant la lentille 23 doit valoir $\theta_{2k}$. Pour un recouvrement optimal des impulsions au niveau du DOE de combinaison 1, le dispositif d'imagerie constitué de la matrice de lentilles 22 et de la lentille de Fourier 23, de grandissement $\gamma = -f_2/f_1$, impose alors la condition suivante sur l'angle d'inclinaison des répartitions spatiales d'énergie $\varphi_{1k}$ en sortie de chaque DOE de compensation 211 :

$$\tan (\varphi_{1k}) = \gamma \tan (\theta_{2k})$$

D'autre part, on considère que chaque DOE de compensation 211 comporte un réseau de pas uniforme $\Lambda_k$, et que sa normale est inclinée d'un angle $\Theta_k$ par rapport à la direction de propagation voulue en sortie du DOE 211 (axe z sur les figures 5a, 5b, 5c). On désigne par $\theta_{1k}$ l'angle entre la direction d'incidence de la source $S_k$ et la direction de propagation voulue en sortie de DOE. Enfin $\varphi_{1k}$ désigne l'angle en sortie de DOE de compensation 211, entre la répartition spatiale d'énergie de l'impulsion et l'axe de propagation de l'impulsion. Les vecteurs d'onde en entrée et en sortie du DOE de compensation 211 ne sont pas parallèles (sauf pour le DOE de compensation qui n'est pas incliné c'est-à-dire tel que : $\Theta_0 = 0$); les angles $\Theta_k$, $\theta_{1k}$ et $\varphi_{1k}$ sont reliés par :

$$\tan(\varphi_{1k}) = \frac{\sin(\theta_{1k} - \Theta_{1k})}{\cos(\Theta_{1k})} + \tan(\Theta_{1k})$$

L'optimisation du recouvrement spatial des impulsions au niveau du DOE de combinaison implique :

$$\frac{\sin(\theta_{1k} - \Theta_k)}{\cos(\Theta_k)} + \tan(\Theta_k) = \gamma \tan\left(k\frac{P_A}{f_2}\right)$$

Ce qui donne une première relation entre les paramètres dimensionnant le système :

la période spatiale $P_A$ des points sources dans le plan A,
l'indice k de la source,
la longueur d'onde centrale des impulsions $\lambda_0$,
le grandissement $\gamma$ du dispositif d'imagerie,
la focale $f_2$ de la lentille de Fourier 23.

D'autre part, comme illustré sur la figure 5c, pour chaque DOE de compensation 211, le pas $\Lambda_{1k}$ de son réseau est établi en fonction de la direction d'incidence $\theta_{1k}$, de la direction d'inclinaison du réseau, et de la longueur d'onde $\lambda_0$ par :

$$\Lambda_{1k} = \frac{\lambda_0}{\sin(\theta_{1k} - \Theta_k) + \sin(\Theta_k)}$$

Au final, l'optimisation du recouvrement spatial des impulsions au niveau du DOE de recombinaison 1 est assurée au moyen du système décrit sur les figures 4 et 5a si les relations suivantes entre les paramètres du système sont vérifiées :

$$\begin{cases} \dfrac{\sin(\theta_{1k} - \Theta_k)}{\cos(\Theta_k)} + \tan(\Theta_k) = \gamma \tan\left(k\dfrac{P_A}{f_2}\right) \\ \Lambda_{1k} = \dfrac{\lambda_0}{\sin(\theta_{1k} - \Theta_k) + \sin(\Theta_k)} \end{cases}$$

Soit :

$$\begin{cases} \dfrac{\sin(\theta_{1k} - \Theta_k)}{\cos(\Theta_k)} + \tan(\Theta_k) = \gamma \tan\left(k\dfrac{P_A}{f_2}\right) \\ \Lambda_{1k} = \dfrac{\lambda_0}{\gamma \tan\left(k\dfrac{P_A}{f_2}\right)\cos(\Theta_k)} \end{cases}$$

On considère à présent la compensation de la dispersion chromatique.
En première approximation, on considère le DOE de combinaison comme la superposition de N réseaux sinusoïdaux (N étant le nombre de faisceaux à combiner), de pas $\Lambda_{2k}$ donné par :

$$\Lambda_{2k} = \frac{\lambda_0}{\sin(\theta_{2k})}$$

La période du réseau du DOE de combinaison est donc égale à :

$$\lambda_0 /\sin \theta_{21.}$$

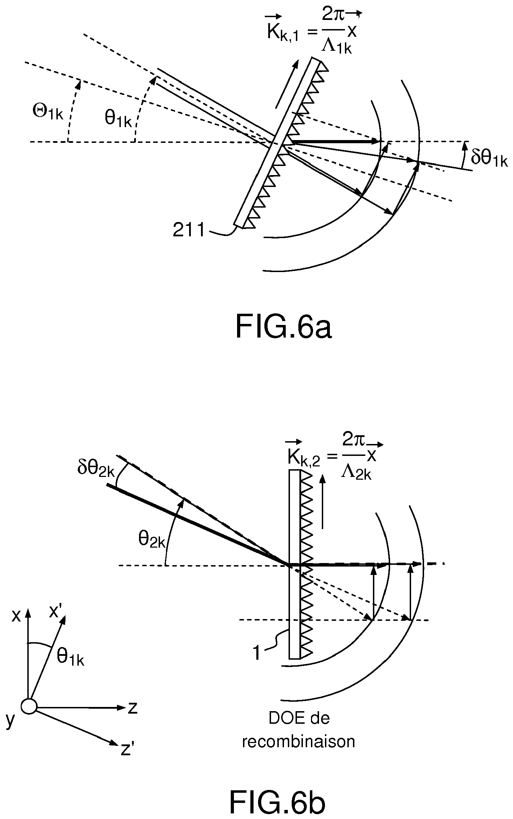

Avec $\theta_{2k}$ l'angle d'incidence du faisceau d'indice k sur le DOE de combinaison 1, à la longueur d'onde centrale $\lambda_0$. Pour traiter la compensation de la dispersion chromatique pour le faisceau indexé k, on considère uniquement le réseau indexé k. On considère un faisceau à une longueur d'onde $\lambda_0 + \delta\lambda_0$ incident sur le DOE de combinaison 1 avec un angle $\theta_{2k} + \delta\theta_{2k}$. Comme illustré sur la figure 6b, pour que les faisceaux diffractés par le DOE 1 à $\lambda_0$ et à $\lambda_0 + \delta\lambda_0$ aient des directions de propagation (ou vecteurs d'onde) parallèles, la conservation de la composante tangentielle au plan du DOE du vecteur d'onde implique :

$$\delta\theta_{2k} = \frac{\delta\lambda}{\lambda_0}\tan(\theta_{2k})$$

La dispersion chromatique du DOE de combinaison 1 vaut donc :

$$\frac{\partial\theta_{2k}}{\partial\lambda} = \frac{\tan(\theta_{2k})}{\lambda_0}$$

De même, pour le DOE de compensation 211 on a vu que le pas du réseau de compensation $\Lambda_{1k}$ est établi en fonction de la direction d'incidence $\theta_{1k}$, de la direction d'inclinaison du réseau, et de la longueur d'onde $\lambda_0$ par :

$$\Lambda_{1k} = \frac{\lambda_0}{\sin(\theta_{1k} - \Theta_k) + \sin(\Theta_k)}$$

Le calcul de l'écart angulaire $\delta\theta_{1k}$ entre les vecteurs d'onde diffractés par le DOE de compensation 211 aux longueurs d'onde $\lambda_0$ et à $\lambda_0 + \delta\lambda_0$ et illustré figure 6a donne :

$$\delta\theta_{1k} = \frac{\delta\lambda}{\lambda_0}\left(\tan(\Theta_k) + \frac{\sin(\theta_{1k})}{\cos\Theta_k}\right)$$

La dispersion angulaire du DOE de compensation 211 vaut donc :

$$\frac{\partial\theta_{1k}}{\partial\lambda} = \frac{1}{\lambda_0}\left(\tan(\Theta_k) + \frac{\sin(\theta_{1k})}{\cos\Theta_k}\right)$$

La condition de compensation chromatique se déduit du calcul du grandissement angulaire du dispositif d'imagerie décentré de grandissement transverse $\gamma$ tel que celui du système décrit en figure 5a. On obtient donc la condition suivante :

$$\frac{\partial\theta_{2k}}{\partial\lambda} = \frac{1}{y(1 + \tan^2(\theta_{2k}))}\frac{\partial\theta_{1k}}{\partial\lambda}$$

Au final, la compensation de la dispersion chromatique du DOE de combinaison 1 est assurée au moyen du dispositif décrit sur les figures 4 et 5a si les relations suivantes sont vérifiées :

$$\Lambda_{1k} = \frac{\lambda_0}{\sin(\theta_{1k} - \Theta_k) + \sin(\Theta_k)}$$

$$\gamma\tan\left(k\frac{P_A}{f_2}\right)\left(1 + \tan^2\left(k\frac{P_A}{f_2}\right)\right) = \tan(\Theta_k) + \frac{\sin(\theta_{1k})}{\cos(\Theta_k)}$$

Selon les conditions établies dans les sections précédentes, la compensation simultanée de la dispersion chromatique du DOE de combinaison 1 et du défaut de recouvrement spatial des impulsions au niveau du DOE de combinaison 1 est assurée au moyen du dispositif décrit sur les figures 4 et 5a si les relations suivantes sont vérifiées :

$$
\left\{
\begin{aligned}
&\Lambda_{1k} = \frac{\lambda_0}{\sin(\theta_{1k} - \Theta_k) + \sin(\Theta_k)} \\
&\gamma \tan\left(k\frac{P_A}{f_2}\right)\left(1 + \tan^2\left(k\frac{P_A}{f_2}\right)\right) = \tan(\Theta_k) + \frac{\sin(\theta_{1k})}{\cos(\Theta_k)} \\
&\frac{\sin(\theta_{1k} - \Theta_k)}{\cos(\Theta_k)} + \tan(\Theta_k) = \gamma \tan\left(k\frac{P_A}{f_2}\right)
\end{aligned}
\right.
$$

Considérons l'exemple du cas suivant :
On veut combiner 101 sources impulsionnelles ultra-brèves (300 ps) disposées en ligne selon une période $P_A$ de 2mm (NB : le calcul suivant est équivalent pour une disposition en 2 dimensions avec 101 sources sur le plus grand diamètre, soit 7651 sources en pavage hexagonal).

Le grandissement du système d'imagerie est fixé à y= -5.

La longueur d'onde centrale vaut $\lambda_0$ = 1030 nm.

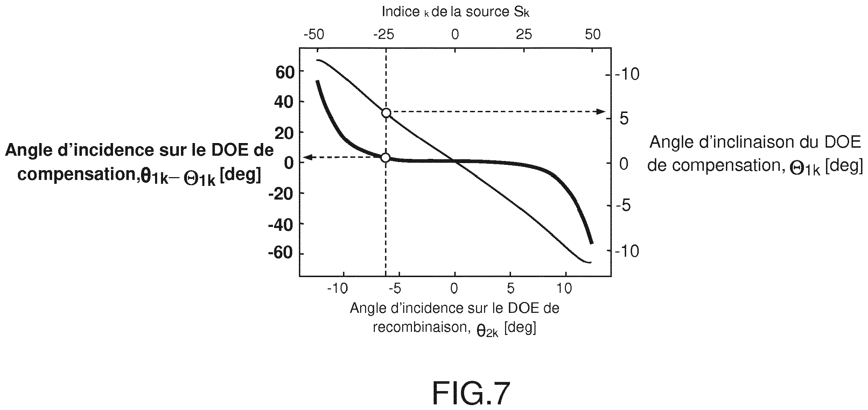

La figure 7 représente les valeurs d'angle d'incidence $\theta_{1k}$ - $\Theta_k$ sur les DOE de compensation et les angles d'inclinaison $\Theta_k$ des DOE de compensation 211, qui vérifient le système ci-dessus, et assurent donc la compensation simultanée des effets de dispersion chromatique du DOE de combinaison 1 et le défaut de recouvrement spatial des impulsions sur le DOE de combinaison.

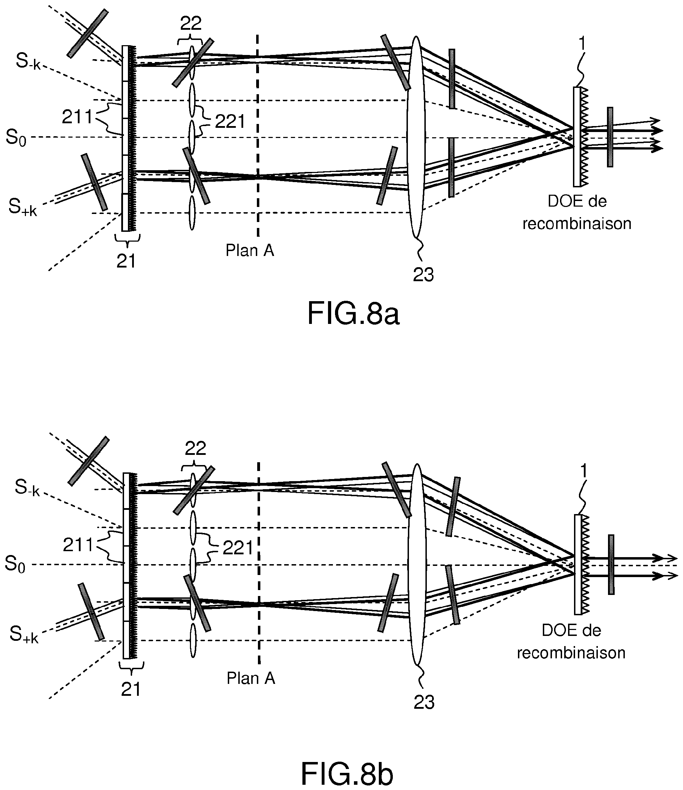

Selon un mode de réalisation particulier de l'invention dont un exemple est montré figures 8a et 8b, les DOE de compensation 211 sont situés sur un même plan, ce qui simplifie le système et évite notamment des dispositifs d'orientation de chaque DOE 211 qui sont encombrants et augmentent le coût du système global. C'est le cas lorsque les réseaux sont par exemple fabriqués sur un même support, ce qui présente des avantages en termes de temps et de coût de fabrication. Cela se traduit alors dans les relations précédentes par des angles d'inclinaison $\Theta_k$ des DOE de compensation nuls : $\Theta_k$ =0.

Alors pour chaque DOE de compensation 211, l'angle d'incidence $\theta_{1k}$ du faisceau est tel que :

- $\gamma.\tan(k\,P_A\,/\,f_2)$ = $\sin(\theta_{1k})$, lorsque l'on souhaite privilégier la compensation du défaut de recouvrement des impulsions recombinées au détriment de la compensation chromatique (fig 8a), ou
- $\gamma.\tan(k\,P_A\,/\,f_2)\,(1 + \tan(k\,P_A\,/\,f_2)^2)$ = $\sin(\theta_{1k})$, lorsque l'on souhaite privilégier la compensation chromatique des impulsions recombinées au détriment de la compensation du défaut de recouvrement (fig 8b).

Les réseaux des DOE de compensation sont avantageusement des réseaux de phase blazés. Alternativement, ils peuvent être des réseaux de phase à profil continu sinusoïdal, à profil binaire, ou des réseaux d'intensité à profil binaire (noir et blanc) ou ne niveaux de gris. Tous ces exemples, hors réseaux blazés, présentent des ordres de diffraction multiples et pénalisent donc l'efficacité globale du système.

Sur les exemples des figures, les DOE de combinaison 1 et de compensation 211 fonctionnent en transmission ; le principe du système selon l'invention reste valable en utilisant des DOE en réflexion.

**Revendications**

1. Système de recombinaison spatiale de faisceaux lasers impulsionnels de même longueur d'onde centrée autour de $\lambda_0$, issus de N sources k synchronisées, k variant de 1 à N, N étant un entier >1, qui a un axe optique et comprend :

   - une lentille de Fourier (23) de focale $f_2$, de plan objet et de plan image prédéfinis, les faisceaux laser présentant à $\lambda_0$ une configuration spatiale périodique de pas $P_A$ dans le plan objet (plan A),
   - un élément optique diffractif de recombinaison (1) à profil de phase périodique, sur lequel les N faisceaux sont destinés à être dirigés par la lentille de Fourier (23) selon un angle d'incidence $\theta_{2k}$ différent d'un faisceau à l'autre, ces angles d'incidence étant déterminés en fonction de la période de l'élément optique diffractif de recombinaison,

   **caractérisé en ce que** les sources sont aptes à émettre des impulsions de durée inférieure à $10^{-12}$ s, et **en ce qu'**il comporte :

   - N éléments optiques diffractifs de compensation à réseau périodique avec un élément optique diffractif de compensation (211) par source, un angle d'incidence $\theta_{1k}$ différent d'un faisceau à l'autre, et un pas de réseau

$\Lambda_{1k}$ différent entre éléments optiques diffractifs de compensation voisins,
- une matrice (22) de lentilles avec une lentille (221) par source, de plan objet et de plan image prédéfinis, formant avec la lentille de Fourier (23) un montage à double TF de grandissement prédéterminé $\gamma$, apte à imager chaque élément optique diffractif de compensation (211) sur l'élément optique diffractif de recombinaison (1), les éléments optiques diffractifs de compensation étant situés dans le plan objet de la matrice (22) de lentilles, l'élément optique diffractif de recombinaison (1) étant situé dans le plan image de la lentille de Fourier (23), le plan image de la matrice (22) de lentilles coïncidant avec le plan objet de la lentille de Fourier (23),

et **en ce que** pour chaque élément optique diffractif de compensation (211), l'angle d'incidence $\theta_{1k}$ du faisceau sur l'élément optique diffractif de compensation, l'angle d'inclinaison $\Theta_k$ de l'élément optique diffractif de compensation sur l'axe optique, et le pas $\Lambda_{1k}$ de son réseau, sont déterminés selon les formules suivantes :

$$\begin{cases} \Lambda_{1k} = \frac{\lambda_0}{\sin(\theta_{1k}-\Theta_k)+\sin(\Theta_k)} \\ \gamma \tan\left(k\frac{P_A}{f_2}\right)\left(1 + \tan^2\left(k\frac{P_A}{f_2}\right)\right) = \tan(\Theta_k) + \frac{\sin(\theta_{1k})}{\cos(\Theta_k)} \\ \frac{\sin(\theta_{1k}-\Theta_k)}{\cos(\Theta_k)} + \tan(\Theta_k) = \gamma \tan\left(k\frac{P_A}{f_2}\right) \end{cases}$$

2. Système de recombinaison spatiale selon la revendication précédente, **caractérisé en ce que** les angles d'inclinaison $\Theta_k$ des éléments optiques diffractifs de compensation (211) sont nuls, et **en ce qu'**ils sont situés dans un même plan.

3. Système de recombinaison spatiale selon la revendication précédente, **caractérisé en ce que** pour chaque élément optique diffractif de compensation (211), l'angle d'incidence $\theta_{1k}$ du faisceau est tel que :

$$\gamma.\tan(k\,P_A\,/\,f_2) = \sin(\theta_{1k}).$$

4. Système de recombinaison spatiale selon la revendication 2, **caractérisé en ce que** pour chaque élément optique diffractif de compensation (211), l'angle d'incidence $\theta_{1k}$ du faisceau est tel que :

$$\gamma.\tan(k\,P_A\,/\,f_2)\,(1 + \tan(k\,P_A\,/\,f_2)^2\,) = \sin(\theta_{1k}).$$

5. Système de recombinaison spatiale selon l'une des revendications précédentes, **caractérisé en ce que** les sources sont disposées selon une configuration spatiale à une dimension ou deux dimensions.

6. Système de recombinaison spatiale selon la revendication précédente, **caractérisé en ce que** les faisceaux issus des sources laser ayant un même plan de sortie, il comprend une autre lentille de Fourier ayant un plan objet dans lequel est situé le plan de sortie des sources laser.

7. Système de recombinaison spatiale selon l'une des revendications précédentes, **caractérisé en ce que** N>100.

8. Système de recombinaison spatiale selon l'une des revendications précédentes, **caractérisé en ce que** les réseaux des éléments optiques diffractifs de compensation sont des réseaux blazés.

**Patentansprüche**

1. System zur räumlichen Rekombination von Impulslaserstrahlen gleicher Wellenlänge, welche um $\lambda_0$ zentriert ist, wobei die Strahlen N synchronisierten k-Quellen entspringen, wobei k von 1 bis N variiert, wobei N eine Ganzzahl > 1, wobei das System eine optische Achse besitzt und Folgendes umfasst:

- eine Fourier-Linse (23) mit einer Brennweite $f_2$, mit vorbestimmter Objektebene und vorbestimmten Bildebene, wobei die Laserstrahlen bei $\lambda_0$ eine periodische räumliche Konfiguration mit einem Abstand $P_A$ in der Objektebene (Ebene A) aufweisen,

- ein optisches Rekombinations-Beugungselement (1) mit periodischem Phasenprofil, bei welchem die N Strahlen dazu bestimmt sind, durch die Fourier-Linse (23) entlang eines Einfallwinkels $\theta_{2k}$ gerichtet zu werden, welcher von einem Strahl zum anderen unterschiedlich ist, wobei diese Einfallwinkel angesichts der Periode des optischen Rekombinations-Beugungselements bestimmt werden,

**dadurch gekennzeichnet, dass** die Quellen in der Lage sind, Pulse einer Dauer unter $10^{-12}$ s auszusenden, und dadurch, dass es Folgendes umfasst:

- N optische Kompensations-Beugungselemente mit periodischem Gitter mit einem optischen Kompensations-Beugungselement (211) pro Quelle, einem Einfallwinkel $\theta_{1k}$, welcher sich von einem Strahl zum anderen unterscheidet und einem Gitterabstand $\Lambda_{1k}$, welcher sich zwischen benachbarten optischen Kompensations-Beugungselementen unterscheidet,
- eine Linsenanordnung (22) mit einer Linse (221) pro Quelle, mit vorbestimmter Objektebene und Bildebene, welche mit der Fourier-Linse (23) eine Montage mit doppelter FT mit vorbestimmter Vergrößerung $\gamma$ bildet, welche in der Lage ist, jedes optische Kompensations-Beugungselement (211) auf dem optischen Rekombinations-Beugungselement (1) abzubilden, wobei die optischen Kompensations-Beugungselemente in der Objektebene der Linsenanordnung (22) befindlich sind, wobei das optische Rekombinations-Beugungselement (1) in der Bildebene der Fourier-Linse (23) befindlich ist, wobei die Bildebene der Linsenanordnung (22) mit der Objektebene der Fourier-Linse (23) zusammenfällt,

und dadurch, dass für jedes optische Kompensations-Beugungselement (211) der Einfallwinkel $\theta_{1k}$ des Strahls auf dem optischen Kompensations-Beugungselement, der Neigungswinkel $\Theta_k$ des optischen Kompensations-Beugungselements auf der optischen Achse und der Abstand $\Lambda_{1k}$ seines Gitters entsprechend folgenden Formeln bestimmt werden:

$$\begin{cases} \Lambda_{1k} = \dfrac{\lambda_0}{\sin(\theta_{1k}-\Theta_k)+\sin(\Theta_k)} \\ \gamma \tan\left(k\dfrac{P_A}{f_2}\right)\left(1 + \tan^2\left(k\dfrac{P_A}{f_2}\right)\right) = \tan(\Theta_k) + \dfrac{\sin(\theta_{1k})}{\cos(\Theta_k)} \\ \dfrac{\sin(\theta_{1k}-\Theta_k)}{\cos(\Theta_k)} + \tan(\Theta_k) = \gamma \tan\left(k\dfrac{P_A}{f_2}\right) \end{cases}$$

2. System zur räumlichen Rekombination nach dem vorhergehenden Anspruch, **dadurch gekennzeichnet, dass** die Neigungswinkel $\Theta_k$ der optischen Kompensations-Beugungselemente (211) gleich null sind, und dadurch, dass sie sich in einer gleichen Ebene befinden.

3. System zur räumlichen Rekombination nach dem vorhergehenden Anspruch, **dadurch gekennzeichnet, dass** bei jedem optischen Kompensations-Beugungselement (211) der Einfallwinkel $\theta_{1k}$ des Strahls so geartet ist, dass:

$$\gamma.\tan(k\,P_A\,/\,f_2) = \sin(\theta_{1k}).$$

4. System zur räumlichen Rekombination nach Anspruch 2, **dadurch gekennzeichnet, dass** bei jedem optischen Kompensations-Beugungselement (211) der Einfallwinkel $\theta_{1k}$ des Strahls so geartet ist, dass:

$$\gamma.\tan(k\,P_A\,/\,f_2)\,(1 + \tan(k\,P_A\,/\,f_2)^2) = \sin(\theta_{1k}).$$

5. System zur räumlichen Rekombination nach einem der vorhergehenden Ansprüche, **dadurch gekennzeichnet, dass** die Quellen in einer räumlichen Konfiguration mit einer oder zwei Dimensionen angeordnet sind.

6. System zur räumlichen Rekombination nach dem vorhergehenden Anspruch, **dadurch gekennzeichnet, dass**, da die aus den Laserquellen stammenden Strahlen eine gleiche Ausgangsebene besitzen, es eine andere Fourier-Linse umfasst, welche eine Objektebene aufweist, in welcher die Ausgangsebene der Laserquellen befindlich ist.

7. System zur räumlichen Rekombination nach einem der vorhergehenden Ansprüche, **dadurch gekennzeichnet, dass** N>100.

8. System zur räumlichen Rekombination nach einem der vorhergehenden Ansprüche, **dadurch gekennzeichnet, dass** die Gitter der optischen Kompensations-Beugungselemente Blaze-Gitter sind.

**Claims**

1. A system for the spatial recombining of pulse laser beams of same wavelength centered around $\lambda_0$, arising from N synchronized sources k, k varying from 1 to N, N being an integer >1, which has an optical axis and comprises:

   - a Fourier lens (23) of focal length $f_2$, of predefined object plane and predefined image plane, the laser beams exhibiting at $\lambda_0$ a periodic spatial configuration of spacing $P_A$ in the object plane (plane A),
   - a recombining diffractive optical element (1) with periodic phase profile, on which the N beams are intended to be directed by the Fourier lens (23) according to an angle of incidence $\theta_{2k}$ that differs from one beam to the next, these angles of incidence being determined as a function of the period of the recombining diffractive optical element,

   **characterized in that** the sources are able to emit pulses of duration less than $10^{-12}$ s, and **in that** it has:

   - N compensating diffractive optical elements with periodic grating with one compensating diffractive optical element (211) per source, an angle of incidence $\theta_{1k}$ that differs from one beam to the next, and a grating spacing $\Lambda_{1k}$ that differs between neighboring compensating diffractive optical elements,
   - an array (22) of lenses with one lens (221) per source, of predefined object plane and predefined image plane, forming with the Fourier lens (23) a double-FT setup of predetermined magnification $\gamma$, able to image each compensating diffractive optical element (211) on the recombining diffractive optical element (1), the compensating diffractive optical elements being situated in the object plane of the array (22) of lenses, the recombining diffractive optical element (1) being situated in the image plane of the Fourier lens (23), the image plane of the array (22) of lenses coinciding with the object plane of the Fourier lens (23),

   and **in that** for each compensating diffractive optical element (211), the angle of incidence $\theta_{1k}$ of the beam on the compensating diffractive optical element, the angle of inclination $\Theta_k$ of the compensating diffractive optical element on the optical axis, and the spacing $\Lambda_{1k}$ of its grating, are determined on the basis of the following formulas:

$$\begin{cases} \Lambda_{1k} = \dfrac{\lambda_0}{\sin(\theta_{1k}-\Theta_k)+\sin(\Theta_k)} \\ \gamma \tan\left(k\dfrac{P_A}{f_2}\right)\left(1 + \tan^2\left(k\dfrac{P_A}{f_2}\right)\right) = \tan(\Theta_k) + \dfrac{\sin(\theta_{1k})}{\cos(\Theta_k)} \\ \dfrac{\sin(\theta_{1k}-\Theta_k)}{\cos(\Theta_k)} + \tan(\Theta_k) = \gamma \tan\left(k\dfrac{P_A}{f_2}\right) \end{cases}$$

2. The spatial recombining system according to the preceding claim, **characterized in that** the angles of inclination $\Theta_k$ of the compensating diffractive optical elements (211) are zero, and **in that** they are situated in one and the same plane.

3. The spatial recombining system according to the preceding claim, **characterized in that** for each compensating diffractive optical element (211), the angle of incidence $\theta_{1k}$ of the beam is such that:

$$\gamma.\tan(k\, P_A\, /\, f_2) = \sin\,(\theta_{1k}).$$

4. The spatial recombining system according to claim 2, **characterized in that** for each compensating diffractive optical element (211), the angle of incidence $\theta_{1k}$ of the beam is such that:

$$\gamma.\tan(k\, P_A\, /\, f_2)\, (1 + \tan(k\, P_A\, /\, f_2)^2\, ) = \sin\,(\theta_{1k}).$$

5. The spatial recombining system according to one of the preceding claims, **characterized in that** the sources are disposed according to a one-dimensional or two-dimensional spatial configuration.

6. The spatial recombining system according to the preceding claim, **characterized in that** the beams arising from the laser sources having one and the same exit plane, it comprises another Fourier lens having an object plane in which the exit plane of the laser sources is situated.

7. The spatial recombining system according to one of the preceding claims, **characterized in that** N>100.

8. The spatial recombining system according to one of the preceding claims, **characterized in that** the gratings of the compensating diffractive optical elements are blazed gratings.

FIG.1a

FIG.1b

FIG.1c

$S_k$

$\Delta\lambda$

$\theta_0$

$\delta\theta_0$

1

$S_{-k}$

DOE de
recombinaison

FIG.2a

Impulsion 2

Impulsion 1

$c\Delta t$

$2\omega$ à $1/e^2$

Recouvrement
spatial

FIG.2b

**FIG.2c**

**FIG.3**

FIG.4

FIG.5a

FIG.5b

FIG.5c

$$\vec{K}_{k,1} = \frac{2\pi}{\Lambda_{1k}}\vec{x}$$

$\Theta_{1k}$  $\theta_{1k}$  $\delta\theta_{1k}$

211

## FIG.6a

$$\vec{K}_{k,2} = \frac{2\pi}{\Lambda_{2k}}\vec{x}$$

$\delta\theta_{2k}$

$\theta_{2k}$

1

x  x'

$\theta_{1k}$

y  z

z'

DOE de
recombinaison

## FIG.6b

FIG.7

FIG.8a

FIG.8b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011305250 A

- DE 102010033630